# FASCICULE DE BREVET EUROPEEN

(11) **EP 2 123 919 B1**
(45) Date de publication et mention de la délivrance du brevet: **11.01.2012**
(21) Numéro de dépôt: 08305177.1
(22) Date de dépôt: 19.05.2008
(51) Int. Cl.: F16B 7/04

(54) **Assemblage rigide de pièces tubulaires**
Starre Verbindung von Rohrteilen
Rigid assembly of tubular parts

(43) Date de publication de la demande: 25.11.2009
(73) Titulaire: Trilogiq SA, 95310 Saint Ouen l'Aumone (FR)
(72) Inventeur: Courtin, Eric, 92200 Neuilly sur Seine (FR)
(74) Mandataire: Derambure, Christian

(56) Documents cités:
- DE-U1-202007 001 480
- GB-A- 1 567 165
- US-B1- 6 343 891
- US-B1- 6 565 279

## Description

L'invention concerne l'assemblage rigide de pièces tubulaires, conformément à la préambule de la revendication 1 (US-B1-6 343 981).

Elle vise plus particulièrement une pièce d'assemblage spécialement destinée à faire partie d'un système d'assemblage rigide de pièces tubulaires; un système d'assemblage comportant deux telles pièces d'assemblage analogues et au moins une vis de fixation ; un assemblage rigide de pièces tubulaires, comprenant des pièces tubulaires et un tel système d'assemblage ; et, enfin, un système de support, manutention ou stockage comportant une pluralité de pièces tubulaires assemblées rigidement entre elles par un tel assemblage rigide.

On connaît des systèmes de support, manutention ou stockage comportant une pluralité de pièces tubulaires assemblées rigidement entre elles par un assemblage rigide. Il est connu que dans un tel assemblage rigide, des pièces tubulaires disposées selon deux premières directions sensiblement perpendiculaires entre elles, sont assemblées rigidement entre elles au moyen d'un système d'assemblage rigide.

Il est connu, dans une réalisation, qu'un tel système d'assemblage rigide comprenne deux pièces d'assemblage et au moins un moyen de fixation apte à permettre de maintenir les deux pièces d'assemblage assemblées rigidement entre elles, et donc à maintenir les deux pièces tubulaires rigidement assemblées entre elles. Il est également connu qu'une telle pièce d'assemblage comporte, formant un ensemble rigide, deux parties ayant des formes de paroi semi cylindrique selon deux premières directions sensiblement perpendiculaires entre elles et tournées dans le même sens.

De façon connue, l'une au moins des deux parties de chacune des deux pièces d'assemblage comporte un ou plusieurs trous, de sorte que les deux pièces d'assemblage face à face enserrant les pièces tubulaires peuvent être maintenues assemblées rigidement entre elles, par les moyens de fixation, à savoir une vis ayant une tête venant en appui sur la première pièce d'assemblage, dont la partie taraudée saille du trou de la seconde pièce d'assemblage, un écrou vissé sur celle-ci venant en appui sur la seconde pièce d'assemblage. L'assemblage est donc réalisé par boulonnage.

Pour réaliser un tel assemblage, l'opérateur dispose les pièces tubulaires, puis il dispose les pièces d'assemblage pour qu'elles enserrent les pièces tubulaires, puis il introduit la vis dans le trou prévu à cet effet dans la première pièce d'assemblage, puis il visse l'écrou sur la partie taraudée saillant du trou correspondant de la seconde pièce d'assemblage.

Un tel assemblage connu présente un certain nombre d'inconvénients. En particulier, l'opérateur doit, simultanément, tenir convenablement dans la position relative appropriée, les pièces tubulaires, les pièces d'assemblage, la vis et l'écrou. Puis, il doit réussir à visser l'écrou sur la partie taraudée saillant du trou de la seconde pièce d'assemblage. Tout cela s'avère être difficile et le plus souvent assez long. C'est d'autant plus vrai lorsque la partie taraudée saillant du trou de la seconde pièce d'assemblage est peu accessible, soit du fait de la configuration du système de support, manutention ou stockage, soit lorsque la seconde pièce d'assemblage comporte une cuvette dans laquelle vient se placer la partie taraudée de la vis.

On connaît également d'autres réalisations d'assemblage, telles que celles décrites dans les documents FR-A-2 701 519, FR-A-2 495 243, FR-A-2 627 240. Toutefois, les assemblages décrits ne permettent pas de résoudre le problème mentionné ci-dessus.

L'invention vise à résoudre ce problème et, également, à proposer un assemblage rigide de pièces tubulaires qui comporte un minimum de pièces standardisées et d'un coût acceptable au regard de l'usage et qui puisse être réalisé rapidement et sans difficulté.

A cet effet, selon un premier aspect, l'invention propose un système d'assemblage conformément à la revendication 1.

Selon une réalisation, la pièce d'assemblage est caractérisée par une cuvette remplissant soit une fonction de logement de la tête de vis de fixation, soit une fonction de logement de la partie extrême libre filetée de la vis de fixation et par un siège attenant à la cuvette remplissant respectivement soit une fonction de surface d'appui de la surface inférieure d'assemblage par pression de la tête de vis de fixation, soit aucune fonction.

Selon une réalisation, la pièce d'assemblage est caractérisée par le fait qu'elle comporte une première partie de plus grande longueur axiale sur la partie laquelle se trouve un siège et un trou taraudé et une seconde partie de plus petite longueur axiale.

Selon une première variante de réalisation, la pièce d'assemblage est caractérisée par le fait que la première partie forme un T avec la seconde partie, la pièce étant destinée à un assemblage rigide de pièces tubulaires formant un T.

Selon une seconde variante de réalisation, la pièce d'assemblage est caractérisée par le fait que la première partie forme un L avec la seconde partie, la pièce étant destinée à un assemblage rigide de pièces tubulaires formant un L.

Selon une réalisation, les dimensions des deux pièces d'assemblage et de la vis de fixation sont choisies pour que la tête de la vis de fixation soit toute entière logée dans la cuvette de la première pièce d'assemblage et la partie extrême libre filetée de la vis de fixation soit toute entière logée dans la cuvette de la seconde pièce d'assemblage.

Selon une réalisation, le système d'assemblage est caractérisé par une vis de fixation à tête creuse.

Selon une réalisation, le système d'assemblage est caractérisé par une vis de fixation montée de manière amovible, en vue du désassemblage.

Selon un troisième aspect, l'invention propose un assemblage rigide de pièces tubulaires, comprenant des pièces tubulaires disposées selon deux premières directions sensiblement perpendiculaires entre elles et un système d'assemblage tel qu'il vient d'être décrit, les deux pièces d'assemblage étant placées face à face et enserrant les pièces tubulaires par l'extérieur, au moins une vis de fixation traversant un espace ménagé dans, ou laissé par la ou les, pièce(s) tubulaire(s), apte maintenir les deux pièces d'assemblage assemblées rigidement entre elles, et donc à maintenir les deux pièces tubulaires rigidement assemblées entre elles, la vis de fixation venant en pression par sa surface inférieure d'assemblage sur le siège de la première pièce d'assemblage et venant être assemblée rigidement avec le trou taraudé en regard de la seconde pièce d'assemblage.

Selon un dernier aspect, l'invention propose un système de support, manutention ou stockage comportant une pluralité de pièces tubulaires assemblées rigidement entre elles caractérisé en ce que des pièces tubulaires sont assemblées rigidement entre elles par un assemblage rigide tel qu'il vient d'être décrit.

On décrit maintenant plusieurs modes de réalisation de l'invention à l'aide des dessins dans lesquels :
- La figure 1 est une vue éclatée, en perspective, partielle, des pièces constitutives du système d'assemblage, les deux pièces d'assemblage n'étant représentées que pour moitié, étant montrées sectionnées par leur plan de symétrie R.
- La figure 2 est une vue en coupe par le plan de symétrie du système d'assemblage dont la vis n'est pas encore montée.
- La figure 3 est une vue analogue à la figure 2, la vis étant partiellement montée.
- La figure 4 est une vue analogue aux figures 2 et 3, la vis étant montée.

Comme il a été mentionné plus haut, l'invention s'applique tout spécialement à des systèmes de support, manutention ou stockage du type comportant une pluralité de pièces tubulaires rigides, longilignes, telles qu'une première pièce P1 et une seconde pièce P2, d'axes respectifs selon deux premières directions D1 et D2.

Les deux pièces P1 et P2 sont assemblées rigidement entre elles de façon perpendiculaire, ou sensiblement perpendiculaire, les deux premières directions D1 et D2 étant perpendiculaires ou sensiblement perpendiculaires entre elles.

Les pièces P1 et P2 sont par exemple de forme générale cylindrique à section droite transversale circulaire (comme représenté sur les figures) ou ovoïde ou autre forme arrondie appropriée. Elles peuvent également de forme générale prismatique à section droite polygonale ou autre forme arrondie appropriée.

Les pièces P1 et P2 peuvent ou non avoir la même forme et/ou les mêmes dimensions, selon les usages. Elles peuvent être pleines ou creuses, selon les usages.

Dans une réalisation typique, les pièces P1 et P2 sont métalliques.

Les pièces P1 et P2 forment un assemblage rigide 1.

L'assemblage 1 comprend, outre les deux pièces tubulaires P1 et P2, un système d'assemblage 2 rigide.

Le système d'assemblage 2 comprend en premier lieu deux pièces d'assemblage analogues, et même plus précisément identiques (avec les avantages inhérents), à savoir une première pièce d'assemblage 3a et une seconde pièce d'assemblage 3b.

Le système d'assemblage 2 comprend en second lieu au moins une vis de fixation 4, par serrage.

Les dispositions constructives sont décrites par la suite en référence à un système d'assemblage 2 comportant une seule vis de fixation 4. Elles peuvent être aisément transposées au cas d'un système d'assemblage comportant plusieurs vis de fixation 4.

Comme il sera décrit par la suite, la vis de fixation 4 est apte à permettre de maintenir les deux pièces d'assemblage 3a, 3b, assemblées rigidement entre elles. Elle est donc également apte à permettre de maintenir les deux pièces P1 et P2 rigidement assemblées entre elles.

On décrit maintenant plus particulièrement une pièce d'assemblage 3a ou 3b. Les deux pièces étant identiques structurellement, on utilise pour la désigner la référence 3. L'indice a et l'indice b sont utilisés pour différencier les deux pièce d'assemblage 3 quant à leur fonction dans le système d'assemblage 2. Il est entendu que le système est parfaitement réversible, la pièce d'assemblage 3a pouvant jouer le rôle de la seconde pièce d'assemblage, tandis que la pièce d'assemblage 3b peut jouer le rôle de la première pièce d'assemblage 3a.

La pièce d'assemblage 3 comporte, formant un ensemble rigide, notamment monobloc venu comme tel de fabrication, deux parties 5 et 6.

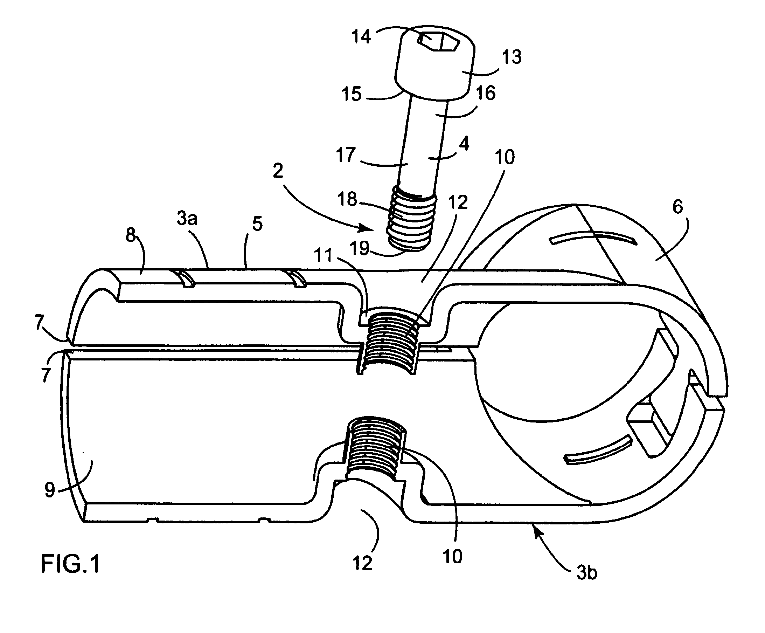

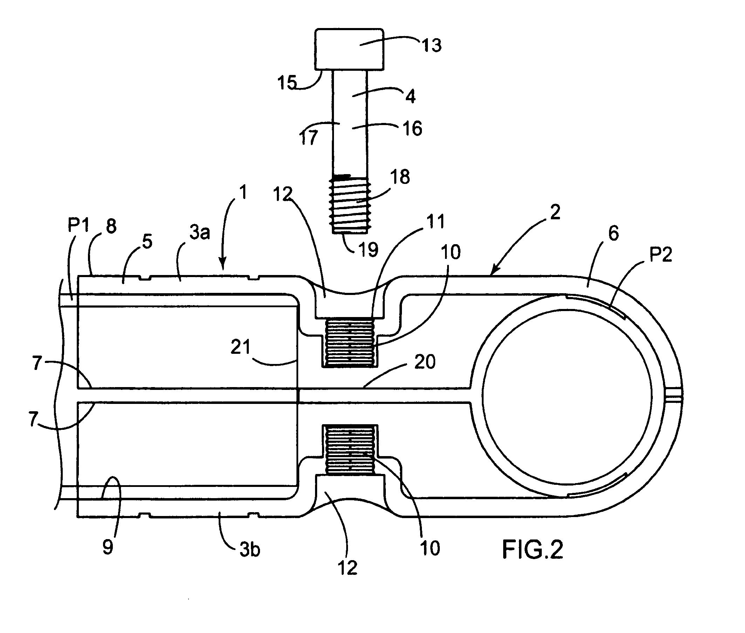

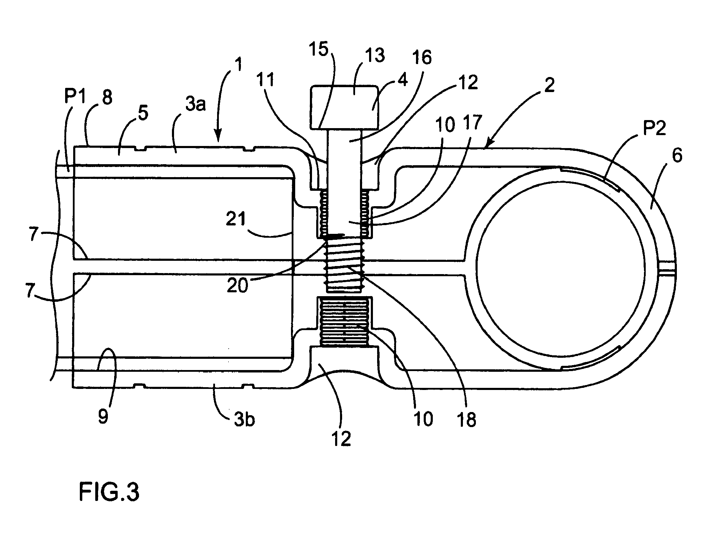

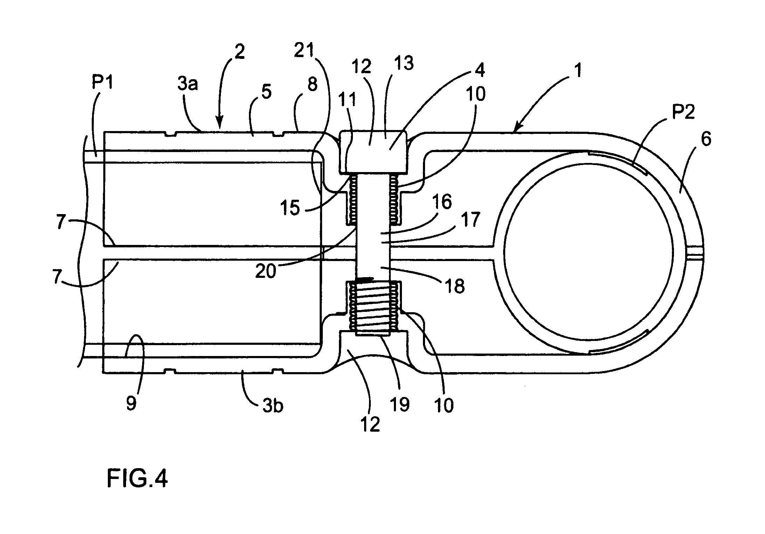

Les deux parties 5 et 6 ont des formes de paroi semi cylindrique s'étendant respectivement selon les deux premières directions D1 et D2, par rapport à un chant d'appui 7 situé dans un plan Q est perpendiculaire au plan des figures 2, 3 et 4). Le plan R perpendiculaire au plan Q est un plan de symétrie de la pièce d'assemblage 3 et de ses deux parties 5 et 6. Ce plan R est le plan qui sert de coupe pour la figure 1.

Les deux parties 5 et 6 de la pièce d'assemblage 3 s'étendent du même côté du chant d'appui 7 et elles sont tournées dans le même sens.

La pièce d'assemblage 3 et ses deux parties constitutives 5 et 6 présentent un extrados 8 convexe et un intrados 9 concave. La première partie 5 de la pièce d'assemblage 3 est destinée, dans l'assemblage 1 réalisé, à venir enserrer la première pièce P1, par son intrados 9. La seconde partie 5 de la pièce d'assemblage 3 est destinée, dans l'assemblage 1 réalisé, à venir enserrer la seconde pièce P2, par son intrados 9. En conséquence, les dimensions internes (diamètre) des deux parties 5 et 6 constitutives de la pièce d'assemblage 3 sont adaptées, respectivement, aux deux pièces P1 et P2.

En outre, les longueurs axiales des deux parties 5 et 6 constitutives de la pièce d'assemblage 3 comptées le long des directions (ou axes) D1 et D2 sont adaptées pour être aptes à enserrer les pièces P1 et P2 sur des longueurs suffisantes pour assurer leur maintien.

Dans la réalisation plus spécialement décrite et représentée sur les figures, la première partie 5 de la pièce d'assemblage 3 forme un T avec la seconde partie 5. Dans cette réalisation, la pièce d'assemblage 3 est destinée à un assemblage rigide 1 de pièces tubulaires P1 et P2 formant un T. Cette disposition constructive est telle que la seconde partie 5 de la pièce d'assemblage 3 s'étend de part et d'autre de la première partie 5.

Dans une autre réalisation (non représentée), la première partie 5 de la pièce d'assemblage 3 forme un L avec la seconde partie 5. Dans cette réalisation, la pièce d'assemblage 3 est destinée à un assemblage rigide 1 de pièces tubulaires P1 et P2 formant un L. Cette disposition constructive est telle que la seconde partie 5 de la pièce d'assemblage 3 s'étend d'un seul côté de la première partie 5.

L'une au moins des deux parties 5 et 6 de la pièce d'assemblage 3 comporte au moins un trou taraudé 10 avec lequel peut coopérer une vis de fixation 4.

Les dispositions constructives étant décrites en référence à un système d'assemblage 2 comportant une seule vis de fixation 4, la dite une au moins des deux parties 5 et 6 de la pièce d'assemblage 3 comporte alors un seul trou taraudé 10 avec lequel peut coopérer la vis de fixation unique 4. Les dispositions constructives étant décrites en référence à cette réalisation. Elles peuvent cependant être aisément transposées au cas d'un système d'assemblage 2 comportant plusieurs trous taraudés 10.

Pour la commodité de la description, on convient que le trou taraudé 10 est ménagé sur la première partie 5 de la pièce d'assemblage 3, la seconde partie 6 en étant ainsi dépourvu. Dans la réalisation représentée, la première partie 5 de la pièce d'assemblage 3 est de plus grande longueur axiale que la seconde partie 6, de plus petite longueur axiale.

Le trou taraudé 10 est un trou débouchant. Il s'étend selon une seconde direction D3, sensiblement transversale aux deux premières directions D1 et D2. Les directions D1 et D3 sont situées dans le plan des figures 2 à 4, tandis que la direction D2 lui est perpendiculaire.

Attenant au trou taraudé 10 est prévu un siège 11.

Le siège 11 est accessible depuis l'extrados 8 de la pièce d'assemblage 3. Il est ménagé au fond d'une cuvette 12 ménagée dans l'extrados 8 de la paroi de la pièce d'assemblage 3, plus précisément et comme indiqué, dans la première partie 5. Le trou taraudé 10 attenant au siège 11 et au fond de la cuvette 12 s'étend vers l'intrados 9 de la pièce d'assemblage 3, à l'opposé de la cuvette 12, c'est-à-dire vers l'intérieur de l'assemblage 1.

On décrit maintenant plus particulièrement la vis de fixation 4.

La vis de fixation 4 comporte tout d'abord une tête 13 ayant une empreinte de vissage 14 en creux et une surface inférieure 15 d'assemblage par pression.

La vis de fixation 4 comporte ensuite un corps 16 ayant une partie de corps non taraudée 17 attenante à la tête 13 et une partie de corps taraudée 18 opposée à la tête 13, dont le diamètre extérieur est au moins égal, notamment légèrement supérieur au diamètre extérieur partie de corps non taraudée 17.

Dans l'assemblage 1 réalisé, la tête 13 de la vis de fixation 4 vient se loger - et plus spécialement toute entière se loger - dans la cuvette 12 de la première pièce d'assemblage 3a.

La surface inférieure 15 d'assemblage par pression de la tête 13 de la vis de fixation 4 vient en appui sur le siège 11 de cette cuvette 12 de la première pièce d'assemblage 3a.

La partie de corps non taraudée 17 de la vis de fixation 4 traverse le trou taraudé 10 attenant au siège 11 et à la cuvette 12 de la première pièce d'assemblage 3a, sans interférer avec le taraudage de ce trou taraudé.

La partie taraudée 18 de la vis de fixation 4 est assemblée rigidement par vissage avec le trou taraudé 10 de la seconde pièce d'assemblage 3b.

La partie extrême libre 19 de la vis de fixation 4 vient se loger - et plus spécialement toute entière se loger - dans la cuvette 12 de la seconde pièce d'assemblage 3b. Cela vise également le cas où cette partie extrême libre 19 ne saille pas substantiellement ou affleure le trou taraudé 10 de la seconde pièce d'assemblage 3b.

Bien entendu, les dimensions des deux pièces d'assemblage 3a, 3b et de la vis de fixation 4 sont choisies de manière à obtenir la configuration qui vient d'être décrite.

Par ailleurs, la vis de fixation 4 traverse un espace 20 ménagé dans, ou laissé par la ou les, pièce(s) tubulaire(s) P1 et P2, au droit des trous taraudés 10. Par exemple, cet espace 20 est ménagé devant l'extrémité libre 21 de la première pièce P1 venant buter contre la face interne des cuvettes 12 en saillie vers l'intérieur.

Ainsi, le trou taraudé 10 remplit soit une fonction de passage de la partie de corps non taraudée 17 de la vis de fixation 4 - s'agissant de la première pièce d'assemblage 3a, soit une fonction une fonction d'assemblage avec la partie taraudée 18 de la vis de fixation - s'agissant de la seconde pièce d'assemblage 3b.

De son côté, la cuvette 12 remplit soit une fonction de logement de la tête 13 de la vis de fixation 4, soit une fonction de logement de la partie extrême libre 19 de cette même vis 4, selon qu'il s'agit de la première pièce d'assemblage 3a ou de la seconde pièce d'assemblage 3b, respectivement, tandis que le siège 11 attenant à la cuvette 12 en cause, remplit respectivement soit une fonction de surface d'appui de la surface inférieure 15 d'assemblage par pression de la tête de vis de fixation 4, soit aucune fonction.

Dans la réalisation qui vient d'être décrite, la vis de fixation 4 est montée de manière amovible, ce qui autorise le désassemblage.

Ainsi que cela résulte de la description qui précède, le système d'assemblage 1 est dépourvu d'écrou de fixation distinct rapporté.

Une pièce d'assemblage 3 ayant la structure décrite précédemment peut être fabriquée grâce aux machines outils connues.

Pour réaliser un assemblage 1 tel que décrit, l'opérateur dispose tout d'abord les pièces P1 et P2 selon la configuration souhaitée.

Puis, l'opérateur dispose les deux pièces d'assemblage 3a et 3b pour qu'elles enserrent les pièces tubulaires P1 et P2.

Puis, il introduit la vis de fixation 4 dans le trou taraudé 10 de la première pièce d'assemblage 3a et poursuit ce mouvement jusqu'à ce que la partie extrême libre 19 vienne interférer avec le trou taraudé 10 de la seconde pièce d'assemblage 3b.

L'opérateur visse alors la vis de fixation 4 dans ce trou taraudé 10 (seconde pièce d'assemblage 3b).

Il poursuit le vissage jusqu'à ce que la première pièce d'assemblage 3a et la seconde pièce d'assemblage 3b soient solidarisées.

Un tel processus d'assemblage ne présente pas les inconvénients des assemblages connus.

## Revendications

1. Système d'assemblage rigide de pièces tubulaires du type comprenant deux pièces d'assemblage, une première et une seconde, et au moins une vis de fixation apte à permettre de maintenir les deux pièces d'assemblage assemblées rigidement entre elles, et donc à maintenir les deux pièces tubulaires rigidement assemblées entre elles,
■ chaque pièce d'assemblage comportant, formant un ensemble rigide, deux parties ayant des formes de paroi semi cylindrique selon deux premières directions sensiblement perpendiculaires entre elles et tournées dans le même sens, et ayant au moins un trou de passage de vis débouchant selon une seconde direction sensiblement transversale aux deux premières directions,
■ la vis de fixation ayant une tête comportant une surface inférieure d'assemblage par pression et un corps ayant une partie de corps non taraudée attenante à la tête et une partie de corps taraudée opposée à la tête,
**caractérisé par le fait que** :
■ les deux pièces d'assemblages sont identiques,
■ le trou est un trou taraudé s'étendant vers l'intrados concave de la pièce d'assemblage, dont est attenant un siège accessible depuis l'extrados convexe de la pièce d'assemblage, lequel siège étant ménagé au fond d'une cuvette,
■ la vis de fixation a une partie de corps taraudée dont le diamètre extérieur est légèrement supérieur au diamètre extérieur de la partie de corps non taraudée,
a la tête de vis de fixation se loge dans la cuvette de la première pièce d'assemblage et vient en appui sur le siège de cette cuvette, la partie de corps non taraudé traverse le trou taraudé attenant de la première pièce d'assemblage sans interférer avec ce taraudage, la partie taraudée est assemblée rigidement par vissage avec le trou taraudé de la seconde pièce d'assemblage, la partie extrême libre filetée de la vis de fixation se loge dans la cuvette de la seconde pièce d'assemblage, le trou taraudé remplissant ainsi soit une fonction de passage de la partie de corps non taraudée de la vis de fixation, soit une fonction d'assemblage avec la partie taraudée de la vis de fixation,
■ l'assemblage rigide est réalisé sans écrou de fixation distinct rapporté.

2. Système d'assemblage selon la revendication 1, **caractérisée par** une cuvette remplissant soit une fonction de logement de la tête de vis de fixation, soit une fonction de logement de la partie extrême libre filetée de la vis de fixation et par un siège attenant à la cuvette remplissant respectivement soit une fonction de surface d'appui de la surface inférieure d'assemblage par pression de la tête de vis de fixation, soit aucune fonction.

3. Système d'assemblage selon l'une quelconque des revendications 1 et 2, **caractérisée par le fait qu'**une pièce d'assemblage comporte une première partie de plus grande longueur axiale sur la partie laquelle se trouve un siège et un trou taraudé et une seconde partie de plus petite longueur axiale.

4. Système d'assemblage selon l'une quelconque des revendications 1 à 3, **caractérisée par le fait que** la première partie d'une pièce d'assemblage forme un T avec la seconde partie, la pièce d'assemblage étant destiné à un assemblage rigide de pièces tubulaires formant un T.

5. Système d'assemblage selon l'une quelconque des revendications 1 à 3, **caractérisée par le fait que** la première partie d'une pièce d'assemblage forme un L avec la seconde partie, la pièce d'assemblage étant destiné à un assemblage rigide de pièces tubulaires formant un L.

6. Système d'assemblage selon l'une quelconque des revendications 1 à 5, **caractérisé en ce que** les dimensions des deux pièces d'assemblage et de la vis de fixation sont choisies pour que la tête de la vis de fixation soit toute entière logée dans la cuvette de la première pièce d'assemblage et la partie extrême libre filetée de la vis de fixation soit toute entière logée dans la cuvette de la seconde pièce d'assemblage.

7. Système d'assemblage selon l'une quelconque des revendications 1 à 6, **caractérisé par** une vis de fixation à tête creuse.

8. Système d'assemblage selon l'une quelconque des revendications 1 à 7, **caractérisé par** une vis de fixation montée de manière amovible, en vue du désassemblage.

9. Assemblage rigide de pièces tubulaires, comprenant des pièces tubulaires disposées selon deux premières directions sensiblement perpendiculaires entre elles et un système d'assemblage selon l'une quelconque des revendications 1 à 8, les deux pièces d'assemblage étant placées face à face et enserrant les pièces tubulaires par l'extérieur, au moins une vis de fixation traversant un espace ménagé dans, ou laissé par la ou les, pièce(s) tubulaire(s), maintenant les deux pièces d'assemblage assemblées rigidement entre elles, et donc maintenant les deux pièces tubulaires rigidement assemblées entre elles, la vis de fixation venant en pression par sa surface inférieure d'assemblage sur le siège de la première pièce d'assemblage et venant être assemblée rigidement avec le trou taraudé en regard de la seconde pièce d'assemblage.

10. Système de support, manutention ou stockage comportant une pluralité de pièces tubulaires assemblées rigidement entre elles **caractérisé en ce que** des pièces tubulaires sont assemblées rigidement entre elles par un assemblage rigide selon la revendication 9.

## Claims

1. A system for rigidly assembling tubular parts of the type including two assembly parts, a first one and a second one, and at least a clamping bolt capable of holding both assembly parts rigidly assembled together, and thus holding both tubular parts rigidly assembled together,
□ each assembly part including, as a rigid assembly, two parts having semi-cylindrical wall shapes along two first directions substantially perpendicular to one another and turned towards the same direction, and having at least one hole for the passage of the screw opening along a second direction substantially transversal with respect to the first two directions,
□ the clamping bolt having a head including a lower assembly surface by pressing and a body having a not threaded body portion adjoining the head and a threaded body portion opposite the head,
**Characterized in that**
□ both assembly parts are identical,
□ the hole is a threaded hole extending towards the concave intrados of the assembly part, adjoining a seat accessible from the convex extrados of the assembly part, which seat is arranged at the bottom of a bowl,
□ the clamping bolt has a threaded body portion, the external diameter of which is slightly greater than the external diameter of the not threaded body portion,
□ the head of the clamping bolt is accommodated in the bowl of the first assembly part and rests on the seat of such bowl, the not threaded body portion going through the adjoining threaded hole of the first assembly part, without interfering with said thread, the threaded portion being rigidly assembled by screwing in the threaded hole of the second assembly part, the threaded free end portion of the clamping bolt being accommodated in the bowl of the second assembly part, the threaded hole thus being used as a passage for the not threaded body portion of the clamping bolt, or as the assembly with the threaded part of the clamping bolt,
□ the rigid assembly is provided without an additional distinct clamping bolt.

2. An assembly system according to claim 1, **characterized by** a bowl used for accommodating the head of the socket head securing screw, or for accommodating the threaded free end portion of the clamping bolt and by a seat adjoining the bowl, respectively used as a rest surface of the lower assembly surface by pressing the head of the clamping bolt, or used for no other function.

3. An assembly system according to any one of claims 1 and 2, **characterized in that** an assembly part includes a first portion having a longer axial length, whereon a seat and a threaded hole are provided, and a second portion having a smaller axial length.

4. An assembly system according to any one of claims 1 to 3, **characterized in that** the first portion of an assembly part forms a T with the second portion, with the assembly part being intended for a rigid assembly of tubular parts forming a T.

5. An assembly system according to any one of claims 1 to 3, **characterized in that** the first portion of an assembly part forms an L with the second portion, with the assembly part being intended for a rigid assembly of tubular parts forming an L.

6. An assembly system according to any one of claims 1 to 5, **characterized in that** the dimensions of both assembly parts and the clamping bolt are so selected that the head of the clamping bolt is totally accommodated in the recess of the first assembly part and the threaded free end portion of the clamping bolt is totally accommodated in the recess of the second assembly part.

7. An assembly system according to any one of claims 1 to 6, **characterized by** a socket head securing screw.

8. An assembly system according to any one of claims 1 to 7, **characterized by** a clamping bolt removably mounted, for disassembling purposes.

9. A rigid assembly of tubular parts, including tubular parts positioned in two first directions perpendicular to one another, and an assembly system according to any one of claims 1 to 8, both assembly parts being positioned opposite each other and surrounding the tubular parts on the outside, with at least one clamping bolt going through a space arranged in, or left by the tubular part(s), holding the two assembly parts rigidly assembled together, with the clamping bolt pressing, with its lower assembly surface, on the seat of the first assembly part and being rigidly assembled with the threaded hole opposite the second assembly part.

10. A support, handling or storage system including a plurality of tubular parts rigidly fixed together, **characterized in that** tubular parts are rigidly fixed together by means of a rigid assembly according to claim 9.

## Patentansprüche

1. Steifes Montagesystem von röhrenförmigen Teilen von dem Typ mit zwei Montageteilen, einem ersten und einem zweiten, und wenigstens einer Befestigungsschraube, die geeignet ist, das Festhalten der zwei montierten Montageteile steif untereinander zu erlauben und damit die zwei röhrenförmigen Teile steif untereinander montiert festzuhalten,
wobei jedes eine steife Struktur bildende Montageteil zwei Teile umfasst, die halbzylindrische Wandformen gemäß zwei ersten, untereinander deutlich lotrechten und in derselben Richtung gerichteten Formen haben und die wenigstens ein blindes Schraubendurchgangsloch haben, das gemäß einer zweiten, zu den ersten beiden Richtungen deutlich transversalen Richtung mündet,
wobei die Befestigungsschraube einen Kopf mit einer unteren Montagefläche per Druck und einen Körper mit einem Körperteil ohne Innengewinde, der am Kopf anliegt, und einen Körperteil mit Innengewinde gegenüber vom Kopf umfasst,
**gekennzeichnet durch** die Tatsache, dass:
die zwei Montageteile identisch sind,
das Loch ein Loch mit Innengewinde ist, das sich zur konkaven inneren Wölbung des Montageteils erstreck, an dem ein Sitz anliegt, der von der konvexen äußeren Wölbung des Montageteils aus zugänglich ist, wobei der genannte Sitz am Boden einer Ringschneide angeordnet ist,
die Befestigungsschraube einen Körperteil mit Innengewinde hat, dessen Außendurchmesser etwas größer ist als der Außendurchmesser des Körperteils ohne Innengewinde,
der Kopf der Befestigungsschraube in der Ringschneide des ersten Montageteils aufgenommen wird und sich auf den Sitz dieser Ringschneide aufstützt, der Körperteil ohne Innengewinde das Loch mit Innengewinde durchquert, das am ersten Montageteil anliegt, ohne mit diesem Innengewinde zu interferieren, der Teil mit Innengewinde steif per Verschraubung mit dem Loch mit Innengewinde des zweiten Montageteils montiert ist, der freie Endteil mit Außengewinde der Befestigungsschraube in der Ringschneide des zweiten Montageteils aufgenommen wird, wobei das Loch mit Innengewinde somit entweder eine Durchgangsfunktion des Körperteils ohne Innengewinde der Befestigungsschraube oder eine Montagefunktion mit dem Teil mit Innengewinde der Befestigungsschraube erfüllt
die steife Montage ohne eigene aufgeschraubte Befestigungsmutter realisiert wird.

2. Montagesystem gemäß Anspruch 1, **gekennzeichnet durch** eine Ringschneide, die entweder eine Aufnahmefunktion des Kopfes der Befestigungsschraube oder eine Aufnahmefunktion des freien Endteils mit Außengewinde der Befestigungsschraube erfüllt, und **durch** einen an der Ringschneide anliegenden Sitz, der jeweils entweder eine Stützflächenfunktion der unteren Montagefläche per Druck des Kopfes der Befestigungsschraube oder keine Funktion erfüllt.

3. Montagesystem gemäß Anspruch 1 und 2, **gekennzeichnet durch** die Tatsache, dass ein Montageteil einen ersten Teil größerer axialer Länge auf dem Teil umfasst, auf dem sich ein Sitz und ein Loch mit Innengewinde befinden, und einen zweiten Teil kleinerer axialer Länge.

4. Montagesystem gemäß Anspruch 1 bis 3, **gekennzeichnet durch** die Tatsache, dass der erste Teil eines Montageteils mit dem zweiten Teil in T bildet, wobei das Montageteil zur steifen Montage von ein T bildenden röhrenförmigen Teilen bestimmt ist.

5. Montagesystem gemäß Anspruch 1 bis 3, **gekennzeichnet durch** die Tatsache, dass der erste Teil eines Montageteils mit dem zweiten Teil ein L bildet, wobei das Montageteil zur steifen Montage von ein L bildenden röhrenförmigen Teilen bestimmt ist.

6. Montagesystem gemäß Anspruch 1 bis 5, **dadurch gekennzeichnet, dass** die Abmessungen der zwei Montageteile und der Befestigungsschraube gewählt sind, damit der Kopf der Befestigungsschraube komplett in der Ringschneide des ersten Montageteils aufgenommen wird und der freie Endteil mit Außengewinde der Befestigungsschraube komplett in der Ringschneide des zweiten Montageteils aufgenommen wird.

7. Montagesystem gemäß Anspruch 1 bis 6, **gekennzeichnet durch** eine Befestigungsschraube mit hohlem Kopf.

8. Montagesystem gemäß Anspruch 1 bis 7, **gekennzeichnet durch** eine Befestigungsschraube, die zwecks Demontage abnehmbar montiert ist.

9. Steife Montage von röhrenförmigen Teilen, die röhrenförmige Teile umfassen, die gemäß zwei ersten, untereinander deutlich lotrechten Richtungen angeordnet sind, und ein Montagesystem gemäß Anspruch 1 bis 8, wobei die zwei Montagesysteme gegenüber und die röhrenförmigen Teile von außen einfassend platziert sind, wobei wenigstens eine Befestigungsschraube einen Raum durchquert, der in (einem) röhrenförmigen Teil (Teilen) angeordnet ist oder von diesem / diesen freigelassen wird, und die zwei untereinander steif montierten Montageteile festhält und damit die zwei steif untereinander montierten röhrenförmigen Teile festhält, wobei die Befestigungsschraube durch ihre untere Montagefläche Druck auf den Sitz des ersten Montageteils ausübt und steif mit dem Loch mit Außengewinde gegenüber von dem zweiten Montageteil montiert wird.

10. Träger-, Transport-, oder Lagerungssystem mit einer Vielzahl von röhrenförmigen, steif untereinander montierten Teilen, **dadurch gekennzeichnet, dass** röhrenförmige Teile steif untereinander durch eine steife Montage gemäß Anspruch 9 montiert sind.
